# EUROPÄISCHE PATENTSCHRIFT

(11) **EP 3 421 822 B1**
(45) Veröffentlichungstag und Bekanntmachung des Hinweises auf die Patenterteilung: **10.11.2021**
(21) Anmeldenummer: 18179999.0
(22) Anmeldetag: 27.06.2018
(51) Int. Cl.: F16B 39/26, A63B 69/00, E04B 1/41, E04G 15/04, F16B 39/34

(54) **SPERRANKER MIT VERDREHSICHERUNG**
LOCKING ANCHOR WITH ANTI-ROTATION FEATURE
ANCRAGE BLOQUANT DOTÉ D'UNE SÉCURITÉ ANTI-ROTATION

(30) Priorität: 28.06.2017 DE 202017103864 U
(43) Veröffentlichungstag der Anmeldung: 02.01.2019
(73) Patentinhaber: DOKA GmbH, 3300 Amstetten (AT)
(72) Erfinder: Amon, Peter, 3300 Amstetten (AT)
(74) Vertreter: Hahner, Ralph

(56) Entgegenhaltungen:
- EP-A2- 0 128 626
- DE-A1- 1 400 864
- DE-A1- 2 744 665
- DE-A1-102007 059 125
- DE-C1- 3 312 294
- DE-U1- 8 813 349
- DE-U1- 9 314 656
- DE-U1-202007 013 452
- GB-A- 479 700
- US-A- 2 880 830

## Beschreibung

Die Erfindung betrifft ein Verankerungselement zur Befestigung einer Kletterschalung an einem Betonkörper.

Gattungsgemäße Verankerungselemente sind im Stand der Technik bekannt. Sie umfassen typischerweise einen verlorenen Sperranker, der in den Beton eingegossen wird, sowie ein potentiell wiederverwertbares Kopplungselement, das mit dem Sperranker in Verbindung steht und der Anbindung der Kletterschalung dient. Der Sperranker weist einen im Beton gehaltenen Kopf und einen Gewindestab auf, der mit einer Gewindebohrung im Kopplungselement zahnt. Wir verweisen beispielshaft auf die DE 10 2007 059 125 A1. Ferner wird zum Stand der Technik auf Dokument DE 27 44 665 A verwiesen.

Im Bereich derartiger Verankerungselemente wurden in der Vergangenheit jedoch nach Belastung vereinzelt Betonschäden wie Rissbildungen oder Betonausbrüche beobachtet. Die vermutete Ursache hierfür war, dass sich der Gewindestab des Sperrankers während des Betonrüttelns mittels eines in den flüssigen Beton eingebrachten Betonrüttlers selbständig etwas aus der Gewindebohrung herausdreht, wodurch ein Gewindespiel entsteht und das Kopplungselement auch nach Aushärten des Betons locker bleibt, sodass es bei Belastung ein Stück weit aus dem Betonkörper gezogen werden kann. Diese Vermutung konnte im Rahmen von Versuchen bestätigt werden.

Ziel der Erfindung ist es, ein gattungsgemäßes Verankerungselement bereitzustellen, mit dem diese Nachteile aus dem Stand der Technik überwunden werden können.

Vor diesem Hintergrund betrifft die Erfindung ein Verankerungselement zur Befestigung einer Kletterschalung an einem Betonkörper, das die Merkmale von Anspruch 1 aufweist.

Das Verankerungselement wird im Anwendungsfall einbetoniert und dient zur Montage von Kletterschalungen im Beton. Zur Einfassung des Verankerungselements in den Betonkörper wird es so an der Schalung befestigt, dass seine Vorderseite an der Schalung anliegt und seine Hinterseite in den Raum zeigt, der dann mit Beton ausgegossen wird. Der Sperranker liegt dann innerhalb des fertigen Betonkörpers und verbleibt als verlorenes Teil permanent im gehärteten Beton. Das Kopplungselement reicht an die Oberfläche des Betonkörpers und ist von außen her zugänglich. An seiner Vorderseite kann beispielsweise ein Gewindebolzen eingedreht werden, um eine Kletterschalung zu montieren. Das Kopplungselement kann aus dem gehärteten Beton entfernt werden, indem das Kopplungselement von der Gewindestange des Ankers gedreht wird. Das Kopplungselement ist wiederverwendbar. Sperranker und Kopplungselement sind typischerweise vollständig aus Metall gefertigt.

Die Lagebezeichnung "hinten" bezeichnet eine ins Innere des Betonkörpers zeigende Lage und die Lagebezeichnung "vorne" eine an die Oberfläche des Betonkörpers zeigende Lage am Verankerungselement oder eines Einzelbestandteils davon.

Das erfindungsgemäß vorgesehene Sicherungselement steht seinerseits verdrehsicher mit dem Kopplungselement in Verbindung. Es dient als Verdrehsicherung für die Gewindestange des Ankers innerhalb der Ankerbohrung des Kopplungselements. Die reibschlüssige Verbindung zwischen Sicherungselement und Gewindestange bewirkt, dass ein selbständiges Ausdrehen beispielsweise beim Rütteln verhindert wird. Die Kopplungselement-Gewindestab-Verbindung lauft somit nicht Gefahr, sich ungewollt lösen zu können und eine sichere Anbindung für die Kletterschalung kann gewährleistet werden.

In einer Ausführungsform ist vorgesehen, dass das Kopplungselement einen ringförmig um die Öffnung der Ankerbohrung verlaufenden Boden aufweist. Es kann ferner vorgesehen sein, dass sich die Mantelfläche des Kopplungselements ausgehend vom Boden konisch erweitert. Die konische Gestalt ermöglicht ein einfacheres Entfernen des Kopplungselements aus dem gehärteten Beton. Der Boden ist vorzugsweise eben und verläuft normal zur Achse des Kopplungselements. Er kann aber auch gekrümmt oder gar halbkugelförmig sein und fließend in den Mantel übergehen.

Erfindungsgemäß ist vorgesehen, dass das Kopplungselement ferner eine um die Mantelfläche des Kopplungselements herum angeordnete Hülse umfasst. Die Hülse vereinfacht das Ausdrehen des Kopplungselements aus dem Beton und hat zusätzlich Schutzfunktion.

In einer Ausführungsform ist vorgesehen, dass die Hülse einen Boden aufweist. Vorzugsweise weist die Hülse ferner einen sich konisch erweiternden Mantel auf. Die Hülse hat in dieser Ausführungsform im Längsschnitt eine becherförmige Gestalt, wobei der Boden des Bechers an dem Boden des Kopplungselements anliegt und der Mantel des Bechers am Mantel des Kopplungselements anliegt.

In einer Ausführungsform ist vorgesehen, dass die Außenkontur der Hülse der Außenkontur dem Boden und der Mantelfläche des Kopplungselements folgt. Die Entsprechung der Außenkonturen vereinfacht das Ausdrehen von Hülse und Kopplungselement aus dem gehärteten Beton.

Es kann vorgesehen sein, die Hülse von hinten auf das Kopplungselement geschoben ist, dass also die Hülse bei der Zusammenstellung des Verankerungselements mit einer vorderen Öffnung von hinten über den Mantel des Kopplungselements geschoben wird, bis der Boden der Hülse am Boden des Kopplungselements ansteht.

In einer Ausführungsform ist vorgesehen, dass die Hülse nicht ganz bis zum vorderen Ende des Mantels reicht sondern ein ringförmiger Kragen am vorderen Mantelende frei bleibt.

In einer Ausführungsform ist vorgesehen, dass der Boden der Hülse einen mit der Ankerbohrung des Kopplungselements fluchtenden, kreisförmigen Durchbruch aufweist.

In einer Ausführungsform ist vorgesehen, dass am Umfangsrand des Durchbruchs eine Dichtlippe vorgesehen ist, die radial über den Umfangsrand der Öffnung der Ankerbohrung steht. Beispielsweise kann vorgesehen sein, dass der Radius des Durchbruchs etwas geringer ist als der Radius der Ankerbohrung und die Dichtlippe durch den resultierenden Überstand des Hülsenbodens gebildet wird. Es kann vorgesehen sein, dass der Hülsenboden im Bereich des Überstands eine verringerte Stärke aufweist, um eine höhere Elastizität der Dichtlippe zu gewährleisten.

Erfindungsgemäß ist vorgesehen, dass das Sicherungselement an der Hülse angeordnet ist.

In einer Ausführungsform ist vorgesehen, dass das Sicherungselement durch eine Zunge gebildet wird, die in die Ankerbohrung reicht und einen Abschnitt des Innengewindes überdeckt. Beim Eindrehen der Gewindestange in die Bohrung wird die Zunge zwischen dem Außengewinde der Gewindestange und dem Innengewinde der Ankerbohrung eingequetscht bzw. verpresst und bewirkt eine Verklemmung der beiden Gewinde, sodass ein selbständiges Ausdrehen beim Hantieren im zu betonierenden Raum, beispielsweise beim Betonrüttelvorgang, verhindert wird.

Die Zunge reicht in axialer Richtung in die Ankerbohrung hinein. Vorzugsweise ist vorgesehen, dass die Zunge an einem Abschnitt des Innengewindes aufliegt. Vorzugsweise ist vorgesehen, dass die Ankerbohrung und der im Querschnitt runde Mantel des Kopplungselements koaxial verlaufen.

In einer Ausführungsform ist vorgesehen, dass die Zunge aus Kunststoff gefertigt ist. Kunststoffe sind als Zungenmaterial besonders geeignet. Sie lassen sich gut zwischen Metallgewinden verpressen und ein selbständiges Ausdrehen beim Rütteln kann durch den Härtegrad und die inhärente Materialelastizität der Kunststoffe besonders effektiv verhindert werden. Die Zunge kann beispielsweise eine flache, im Wesentlichen rechteckige Gestalt haben. Aber auch andere Ausbildungen sind selbstverständlich denkbar.

In einer Ausführungsform ist die gesamte Hülse nebst Sicherungselement aus Kunststoff gefertigt.

Sofern das Sicherungselement durch eine Zunge gebildet wird, kann diese im Bereich des Umfangsrandes des Durchbruchs vom Hülsenboden abstehen.

In einer Ausführungsform ist vorgesehen, dass die Hülse mehrere Zungen aufweist, die in die Ankerbohrung reichen und einen Abschnitt von deren Innengewinde überdecken. Die Zungen können alle identisch ausgebildet sein und mit maximalen Winkelabständen über den Umfang der Ankerbohrung verteilt sein.

In einer Ausführungsform ist vorgesehen, dass das Kopplungselement ferner eine axiale Kopplungsbohrung aufweist, die vorzugsweise ebenfalls ein Innengewinde aufweist. Die Kopplungsbohrung dient zur lösbaren Befestigung eines beliebigen Bauteils am Verankerungselement und damit letztlich am Betonkörper. Im Falle eines Innengewindes kann das Bauteil beispielsweise mit einem Gewindebolzen angeschraubt werden. Bei dem Bauteil kann es sich beispielsweise um einen Aufhängeschuh für eine Kletterschalung handeln. Vorzugsweise ist vorgesehen, dass die Ankerbohrung und die Kopplungsbohrung koaxial verlaufen.

In einer Ausführungsform ist vorgesehen, dass die Länge der Gewindestange die Tiefe der Ankerbohrung übersteigt. Der Endpunkt der Ankerbohrung dient sowohl als Stopper als auch als Markierung, sodass der Sperranker weder zu weit noch zu wenig weit in das Kopplungselement eingedreht wird. So kann ein definierter Überstand der Gewindestange erreicht werden.

In einer Ausführungsform ist vorgesehen, dass die Ankerbohrung und die Kopplungsbohrung im Inneren des Kopplungselements ineinanderlaufen. In dieser Ausführungsform ist das Kopplungselement also in axialer Richtung von hinten bis vorne durchbohrt. Dies hat den Vorteil, dass im einbetonierten Zustand die Position des Sperrankers innerhalb der Ankerbohrung visuell festgestellt werden kann.

Es kann vorgesehen sein, dass die Innendurchmesser von Anker- und Kopplungsbohrung unterschiedlich groß sind. Insbesondere kann vorgesehen sein, dass der Innendurchmesser der Ankerbohrung kleiner ist als der Innendurchmesser der Kopplungsbohrung.

In einer Ausführungsform ist vorgesehen, dass im Übergangsbereich von Ankerbohrung und Kopplungsbohrung ein Trennelement vorgesehen ist. Das Trennkörelement dient als Endpunkt der Bohrungen. Er verhindert, dass im Falle eines kleineren Innendurchmessers der Ankerbohrung der Sperranker zu weit in das Kopplungselement eingedreht werden kann. Er kann außerdem als definierter Endpunkt für eine Drehung dienen, sodass beispielsweise der Sperranker auch nicht zu wenig weit in das Kopplungselement eingedreht werden kann. Das Trennelement kann beispielsweise stiftförmig sein und in radialer Richtung von der Innenwand der Kopplungs- oder vorzugsweise Ankerbohrung abstehen.

Weitere Einzelheiten und Vorteile der Erfindung ergeben sich aus dem nachfolgend anhand der Figuren erläuterten Ausführungsbeispiel. In den Figuren zeigen:
- Figur 1:: eine perspektivische Teilschnittansicht einer Ausführungsform eines erfindungsgemäßen Verankerungselements;
- Figur 2:: eine seitliche Teilschnittansicht des in Figur 1 gezeigten Verankerungselements;
- Figur 3:: eine perspektivische Schnittansicht des Kopplungselements des in Figur 1 gezeigten Verankerungselements;
- Figur 4:: eine perspektivische Schnittansicht der Hülse des in Figur 3 gezeigten Kopplungselements; und
- Figur 5:: eine seitliche Teilschnittansicht eines nicht erfindungsgemäßen Verankerungselements.

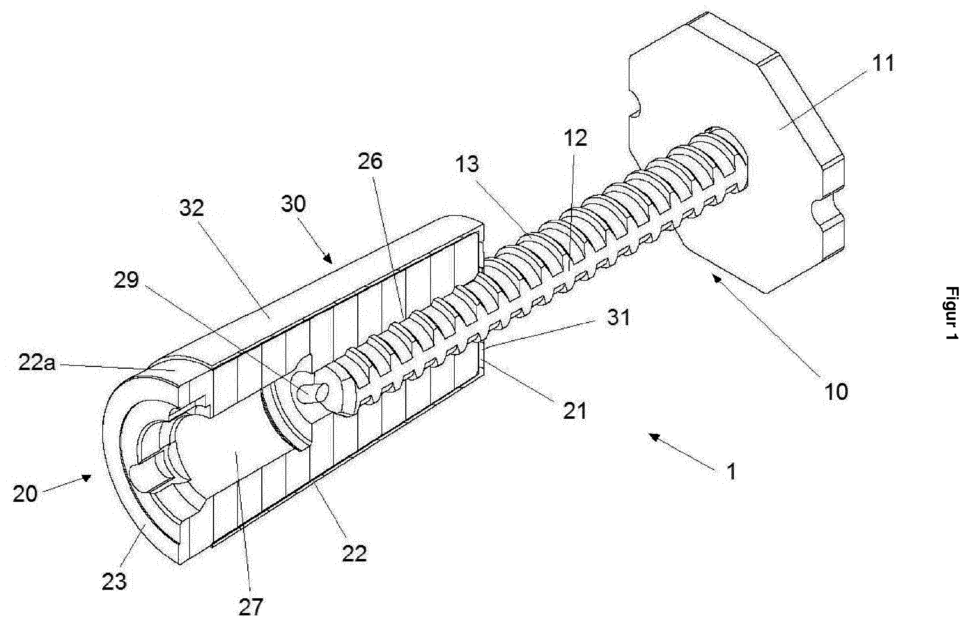

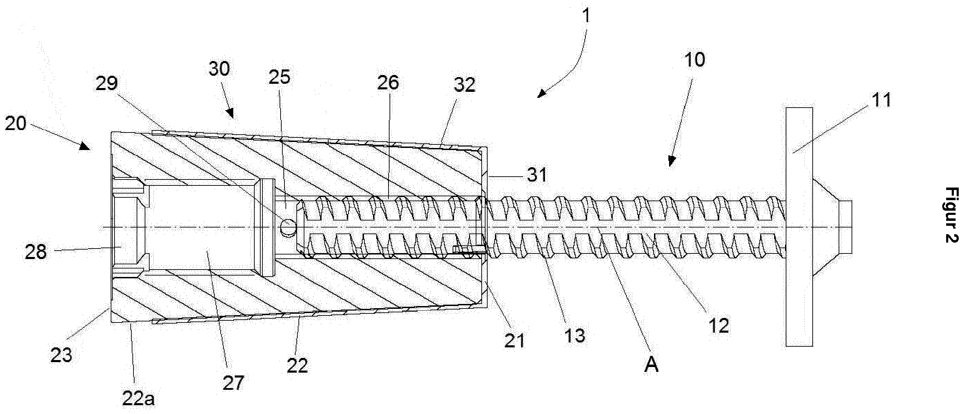

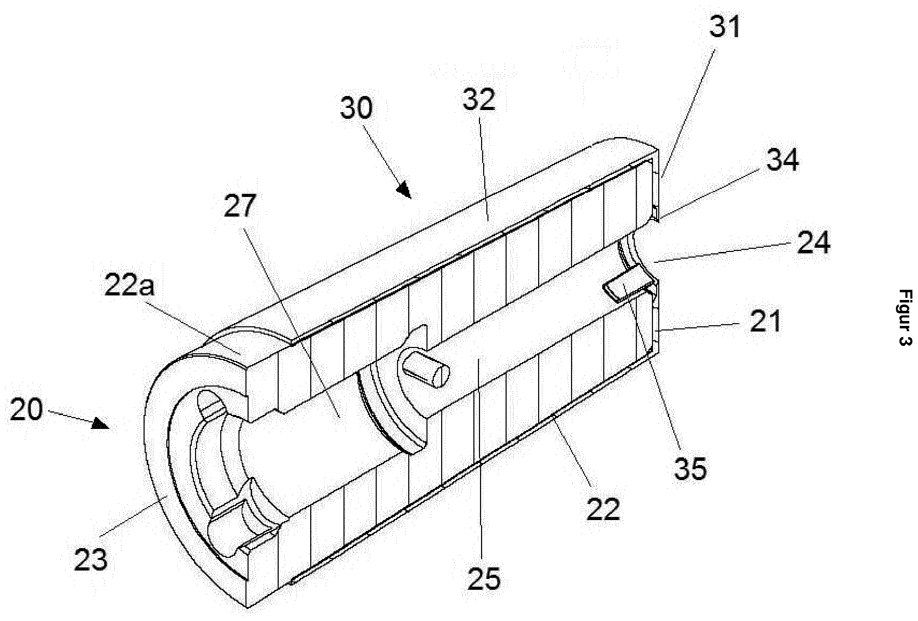

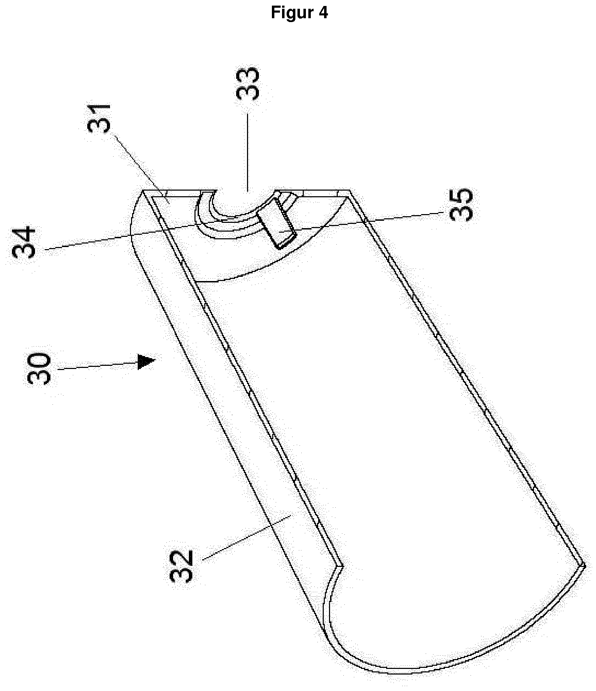

In den Figuren 1-4 ist eine Ausführungsform eines erfindungsgemäßen Verankerungselements dargestellt. Das Verankerungselement ist allgemein mit dem Bezugszeichen 1 gekennzeichnet und umfasst drei Teile, nämlich einen Sperranker 10, ein Kopplungselement 20 und eine auf das Kopplungselement 20 gesteckte Hülse 30 .

Der Sperranker 10 ist aus Stahl gefertigt. Er hat die Gestalt einer Schraube und umfasst einen normal zur Achse A stehenden plattenförmigen Kopf 11 und eine entlang der Achse A ausgerichtete Gewindestange 12.

Der plattenförmige Kopf 11 ist flach und ausladend ausgebildet, um eine gute Verankerung im gehärteten Beton zu gewährleisten. Beispielsweise kann der Kopf 11 einen Radius von zwischen 3 und 15 cm, in bestimmten Gestaltungen von 5,5 cm oder 9 cm aufweisen. Der Umfangsrand des Kopfes 11 ist nicht perfekt rund sondern konturiert, um eine bessere Kraftübertragung beim Eindrehen in das Kopplungselement zu ermöglichen.

Der Gewindestab 12 kann eine Länge von beispielsweise 10 bis 20 cm, in bestimmten Gestaltungen von 12,5 cm oder 17,5 cm aufweisen. Der Durchmesser beträgt beispielsweise etwa 0,5 cm bis 2 cm. Bei dem Gewinde 13 des Stabes 12 kann es sich um ein herkömmliches Dywidag-Gewinde handeln.

Das Kopplungselement 20 wird durch einen entlang der Achse A ausgerichteten Rundkörper aus Stahl gebildet. Es umfasst einen flachen und normal auf die Achse A stehenden Boden 21, eine ausgehend vom Boden 21 konisch auseinanderlaufende Mantelfläche 22 und ein an die Mantelfläche 22 anschließendes, ebenfalls flaches und normal auf die Achse A stehendes Dach 23. Der Boden 21 und das Dach 23 sind parallel zueinander ausgerichtet und jeweils kreisförmig.

Ausgehend von einer Öffnung 24 im Boden 21 reicht eine entlang der Achse A ausgerichtete Ankerbohrung 25 ins Innere des Kopplungselements 20. Die Ankerbohrung 25 weist ein Innengewinde 26 auf, das zum Außengewinde 13 des Stabes 12 korrespondiert. Auch hier kann es sich um ein herkömmliches Dywidag-Gewinde handeln. Der Innendurchmesser der Ankerbohrung 25 korrespondiert zum Außendurchmesser des Stabes 12 und kann entsprechend beispielsweise zwischen 0,5 und 2 cm betragen. Die Tiefe der Ankerbohrung 25 ist geringer als die Länge des Stabes 12, sodass der Sperranker 10 im vollständig eingedrehten Zustand des Stabes maßgeblich nach hinten über den Boden 21 des Kopplungselements 20 hinaussteht. So kann erreicht werden, dass der Kopf 11 des Sperrankers 10 tief und stabil im Beton verankert ist.

Neben der Ankerbohrung 25 umfasst das Kopplungselement 20 ferner eine Kopplungsbohrung 27, die sich ausgehend von einer Öffnung 28 im Dach 23 des Kopplungselements 20 entlang der Achse A ins Innere des Kopplungselements 20 erstreckt. Die Ankerbohrung 25 und die Kopplungsbohrung 27 verlaufen koaxial. Auch die Kopplungsbohrung 27 kann ein in der Figur nicht näher dargestelltes Innengewinde aufweisen, um beispielsweise mit einem Gewindebolzen einen Aufhängeschuh für eine Kletterschalung anschrauben zu können. Der Durchmesser der Kopplungsbohrung 27 ist im gezeigten Ausführungsbeispiel etwas größer als der Durchmesser der Ankerbohrung 25 und kann beispielsweise zwischen 1 und 3 cm betragen.

Die Ankerbohrung 25 und die Kopplungsbohrung 27 laufen im Inneren des Kopplungselements 20 ineinander, sodass das Kopplungselement 20 in axialer Richtung von Boden 21 bis Dach 23 durchbohrt ist. Dies hat den Vorteil, dass im einbetonierten Zustand die Position des Sperrankers 10 innerhalb der Ankerbohrung 25 visuell festgestellt werden kann. Nahe dem Übergang zur Kopplungsbohrung 27 ist ein radial von der Wand der Ankerbohrung 25 abstehender Stift 29 vorgesehen, der als Stopper dient. Er verhindert einerseits, dass der Sperranker 10 zu weit in das Kopplungselement 20 eingedreht werden kann, und dient gleichzeitig als definierter Endpunkt für den Sperranker 10, damit dieser auch nicht zu wenig weit in das Kopplungselement 20 eingedreht wird.

Die Hülse 30 ist aus Kunststoff gefertigt. Sie hat eine becherförmige Gestalt und folgt der Kontur des Kopplungselements 20, weist also ihrerseits einen flachen und normal auf die Achse A stehenden Boden 31 und einen ausgehend vom Boden 31 konisch auseinanderlaufende Mantel 32 auf. Sie ist so auf das Kopplungselement geschoben, dass der Boden 31 der Hülse 30 am Boden 21 des Kopplungselements 20 ansteht und der Mantel 32 der Hülse 30 an der Mantelfläche 22 des Kopplungselements 20 anliegt. Allerdings reicht der Mantel 32 der Hülse 30 nicht ganz bis zum deckenseitigen Ende der Mantelfläche 22 des Kopplungselements 20, sondern endet kurz davor, sodass ein Kragen 22a am deckenseitigen Ende der Mantelfläche 22 unbedeckt bleibt. Die Breite des Kragens kann beispielsweise zwischen 1 und 2 cm betragen. Die Hülse 30 umfasst keinen Deckel sondern ist zur Deckenseite hin offen.

Im Boden 31 der Hülse 30 ist ein mit der Ankerbohrung 25 des Kopplungselements fluchtender, kreisförmiger Durchbruch 33 vorgesehen. Der Durchbruch 33 hat einen etwas geringeren Radius als die Öffnung 24 der Ankerbohrung 25 im Boden 21 des Kopplungselements 20, sodass der Boden 31 der Hülse 30 geringfügig radial über den Umfangsrand der Öffnung 24 übersteht. Der Überstand 34 hat die Funktion einer Dichtlippe und verhindert ein Eindringen von flüssigem Beton in den Spalt zwischen der Ankerbohrung 25 und der Gewindestange 12. Im Bereich des Überstands 34 hat der Boden 31 des Dichtungselements eine verringerte Stärke, um eine höhere Elastizität der Dichtlippe zu gewährleisten.

An der Hülse 30 ist ferner eine Zunge 35 vorgesehen, die ausgehend vom Umfangsrand oder von der Nähe des Umfangsrandes der Öffnung 24 in axialer Richtung, also parallel zur Achse A ein Stück in die Ankerbohrung 25 hineinragt. Die Zunge 25 liegt dabei an einem Abschnitt des Innengewindes 26 der Ankerbohrung 25 auf. Sie wird durch einen im Wesentlichen rechteckigen Materialstreifen von beispielsweise 0,5 cm Breite und 1 cm Länge gebildet. Die Zunge 35 dient als Verlier- bzw. Verdrehsicherung und ermöglicht eine drehsichere Lagerung des Sperrankers 10 im Kopplungselement 20. Die Zunge 35 ist wie die Hülse 30 insgesamt aus Kunststoff gefertigt.

Das gezeigte Verankerungselement 1 gemäß Ausführungsbeispiel wird im Anwendungsfall einbetoniert und dient zur Montage einer Kletterschalung in den bestehenden Teilen eines Betonbauwerks. Dabei stellt der Sperranker 10 ein verlorenes Teil dar und verbleibt permanent im Beton. Das Kopplungselement 20 reicht an die Oberfläche des Betonkörpers und ist von außen her zugänglich. Es kann beim Abbau des Verankerungselements 1 ausgedreht und wiederverwertet werden. Die Möglichkeit zum Ausdrehen des Kopplungselements 20 ist dabei einerseits seiner konischen Gestalt und andererseits der Kunststoffhülse 30 geschuldet. Die Hülse 30 kann nach dem Ausdrehen des Kopplungselements 20 ebenfalls aus dem Beton entnommen und wiederverwertet werden. Zur Einfassung des Verankerungselements 1 in den Betonkörper wird es so an einer Schalung befestigt, dass die Decke 23 des Kopplungselements 20 an der Schalung anliegt und das Verankerungselement 1 dann entlang der Achse A in den Raum reicht, der dann mit Beton ausgegossen wird. Die Schalung steht dabei parallel zur Ebene der Decke 23 und mithin auch des Bodens 21 des Kopplungselements 20.

Versuche haben gezeigt, dass die Zunge der Ausführungsform gemäß Figuren 1-4 eine effektive Verdrehsicherung für die Gewindestange des Sperrankers innerhalb der Ankerbohrung des Kopplungselements darstellt. Im Rahmen der Versuche wurden Sperranker mit einem hülsenüberzogenen Kopplungselement verschraubt und das resultierende Verankerungselement wurde in üblicher Weise an einer Schalung befestigt. Anschließend wurde ein Rüttlerschlauch in Betrieb genommen und mehrmals an dem befestigten Verankerungselement entlang auf und ab geführt.

Die Ergebnisse sind in der nachfolgenden Tabelle 1 dargestellt.

In den Vergleichsbeispielen SdT 1-9 wurden Hülsen aus dem Stand der Technik mit Dichtlippe aber ohne erfindungsgemäße Zunge verwendet. In den erfindungsgemäßen Beispielen Erf 10-21 wurden erfindungsgemäße Hülsen mit der erfindungsgemäßen Zunge verwendet.

Das System 20,0 bezeichnet ein System, in dem der Sperranker einen Stabdurchmesser von 2 cm aufweist. Das System 15,0 bezeichnet ein System, in dem der Sperranker einen Stabdurchmesser von 1,5 cm aufweist. Die Stablänge beträgt in beiden Fällen 17,5 cm und die Tiefe der Ankerbohrung beträgt in beiden Fällen 8 cm. In beiden Fällen werden die korrespondierenden Gewinde durch Dywidag-Gewinde gebildet.

Der Anlenkungswinkel bezeichnet den Winkel des an das Verankerungselement angelegten Rüttlerstabs zur Vertikalen.

Bei einer Umdrehungszahl von 7 Umdrehungen wäre der Stab vollständig aus der Ankerbohrung ausgedreht.

**Tabelle 1**

| **Versuch** | **System** | **Anlenkungswinkel** | **Zustand der Dichtungshülse** | **Anzahl der Umdrehungen** |
|---|---|---|---|---|
| **SdT 1** | 20,0 | 0° | gebraucht | 5 |
| **SdT 2** | | 15° | | 5 |
| **SdT 3** | | 30° | | 5 |
| **SdT 4** | | 0° | neu | 0,5 |
| **SdT 5** | | 0° | neu + 3x ein und aus geschraubt | 1 |
| **SdT 6** | | 0° | neu + 2x 78mm über Ankerstabgewinde hin und her geschoben | 2,5 |
| **SdT 7** | 15,0 | 0° | gebraucht | 3 |
| **SdT 8** | | 15° | | 2 |
| **SdT 9** | | 30° | | 2 |
| **Erf 10** | 15,0 | 0° | neu | 0 |
| **Erf 11** | | 15° | | 0 |
| **Erf 12** | | 30° | | 0 |
| **Erf 13** | | 0° | neu + 3x ein und aus geschraubt | 0 |
| **Erf 14** | | 15° | | 0 |
| **Erf 15** | | 30° | | 0 |
| **Erf 16** | 20,0 | 0° | neu | 0,2 |
| **Erf 17** | | 15° | | 0,2 |
| **Erf 18** | | 30° | | 0,2 |
| **Erf 19** | | 0° | neu + 3x ein und aus geschraubt | 0,2 |
| **Erf 20** | | 15° | | 0,2 |
| **Erf 21** | | 30° | | 0,2 |

Den Versuchsdaten kann entnommen werden, dass die Verankerungselemente aus dem Stand der Technik bei neuer Dichtungshülse (Versuch SdT 4) und mithin intakter Dichtlippe noch einigermaßen brauchbare Ergebnisse erzielen, dass aber bei nur leichten Gebrauchsspuren, insbesondere an der Dichtlippe, (Versuche SdT 5-6) schon ein starkes Ausdrehen beobachtet wird. Sehr schlechte Ergebnisse werden mit gebrauchten Dichtungshülsen erzielt (Versuche SdT 1-3 und 7-9). Hier wird sogar teilweise ein mehr oder weniger vollständiges Ausdrehen beobachtet, denn ab 5 Umdrehungen kippt der Stab durch Schwerkrafteinwirkung aus der Achse und bewirkt eine Verklemmung, die ein weiteres Ausdrehen verhindert, das andernfalls wohl zu beobachten gewesen wäre.

Die erfindungsgemäßen Verankerungselemente mit der Zunge als Verdrehsicherung erzielen sämtlich gute Ergebnisse. Dies gilt für den neuen Zustand (Versuche Erf 10-12 und 16-18) und insbesondere auch für den gebrauchten Zustand (Versuche Erf 13-15 und 19-21).

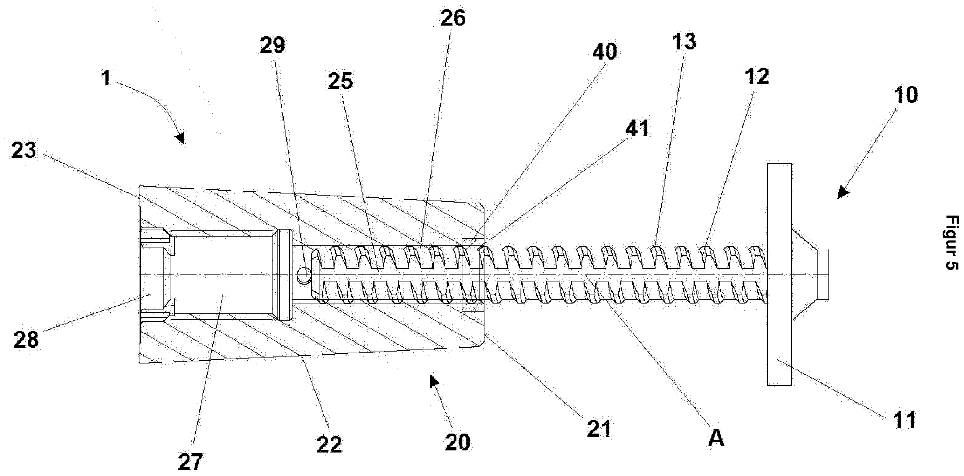

Figur 5 zeigt eine Ausführungsform eines nicht erfindungsgemäßen Verankerungselements. Identische Teile werden mit identischen Bezugszeichen gekennzeichnet.

Die Ausführungsform der Figur 5 unterscheidet sich von der Ausführungsform gemäß Figuren 1-4 durch das Fehlen der Hülse und der Zunge. Stattdessen ist als Sicherungselement ein Sicherungsring 40 aus Kunststoff vorgesehen, der vollständig in einer Freistellung in Form eines planeingesenkten Absatzes 41 am bodenseitigen Ende der Ankerbohrung 25 aufgenommen ist. Der Innendurchmesser des Sicherungsrings 40 ist geringer als der Innendurchmesser des Innengewindes 26 von Spitze zu Spitze, sodass das Gewindespiel reduziert wird. Der Sicherungsring 40 selbst weist kein Gewinde auf. Der Absatz 41 ist im Querschnitt rund und der Sicherungsring 40 ist gegenüber dem Kopplungselement 20 ebenso wie gegenüber dem Sperranker 10 durch Reibschluss gegen ein Verdrehen gesichert. Der Sicherungsring 40 erfüllt neben seiner Hauptfunktion, nämlich der Behinderung der Ausdrehbewegung der in der Ankerbohrung 25 aufgenommenen Gewindestange 12, auch noch eine Nebenfunktion, nämlich eine Abdichtung der Ankerbohrung 25 gegen Beton und Feuchtigkeit.

## Patentansprüche

1. Verankerungselement (1) zur Befestigung einer Kletterschalung an einem Betonkörper, das einen Sperranker (10) und ein Kopplungselement (20) umfasst, wobei der Sperranker (10) einen Kopf (11) und eine Gewindestange (12) mit einem Außengewinde (13) aufweist, und wobei das Kopplungselement (20) durch einen, insbesondere länglichen, Körper, insbesondere Rundkörper, mit einer axialen Ankerbohrung (25) gebildet wird, die ein Innengewinde (26) aufweist, das mit dem Außengewinde (13) der Gewindestange (12) zahnt und eine um das Kopplungselement (20) herum angeordnete Hülse (30) vorgesehen ist,
**dadurch gekennzeichnet,**
**dass** ein Sicherungselement vorgesehen ist, das reibschlüssig auf das Außengewinde (13) der Gewindestange (12) und/oder das Innengewinde (26) der Ankerbohrung (25) wirkt und geeignet ist, eine Ausdrehbewegung der in der Ankerbohrung (25) aufgenommenen Gewindestange (12) zu behindern, wobei das Sicherungselement an der Hülse angeordnet ist.

2. Verankerungselement nach Anspruch 1, **dadurch gekennzeichnet, dass** das Kopplungselement (20) einen ringförmig um die Öffnung (24) der Ankerbohrung (25) verlaufenden Boden (21) und eine sich ausgehend vom Boden (21) konisch erweiternde Mantelfläche (22) aufweist.

3. Verankerungselement nach einem der Ansprüche 1 oder 2 , **dadurch gekennzeichnet, dass** die Außenkontur der Hülse (20) der Außenkontur des Bodens (21) und der Mantelfläche (22) des Kopplungselements (20) folgt.

4. Verankerungselement nach einem der Ansprüche 1 bis 3, **dadurch gekennzeichnet, dass** der Boden (31) der Hülse (30) einen mit der Ankerbohrung (25) des Kopplungselements (20) fluchtenden, kreisförmigen Durchbruch (33) aufweist.

5. Verankerungselement nach Anspruch 4, **dadurch gekennzeichnet, dass** am Umfangsrand des Durchbruchs (33) eine Dichtlippe (34) vorgesehen ist, die radial über den Umfangsrand der Öffnung (24) der Ankerbohrung (25) steht.

6. Verankerungselement nach einem der Ansprüche 1 bis 5, **dadurch gekennzeichnet, dass** das Sicherungselement durch eine Zunge (35), vorzugsweise eine Kunststoffzunge, gebildet wird, die in die Ankerbohrung (25) reicht und einen Abschnitt des Innengewindes (26) überdeckt.

7. Verankerungselement nach Anspruch 6, **dadurch gekennzeichnet, dass** die Zunge (35) an der Hülse (30) angeordnet ist.

8. Verankerungselement nach einem der vorhergehenden Ansprüche, **dadurch gekennzeichnet, dass** die Länge der Gewindestange (12) die Tiefe der Ankerbohrung (25) übersteigt.

9. Verankerungselement nach einem der vorhergehenden Ansprüche, **dadurch gekennzeichnet, dass** das Kopplungselement (20) ferner eine axiale Kopplungsbohrung (27) aufweist.

10. Verankerungselement nach Anspruch 9, **dadurch gekennzeichnet, dass** die Ankerbohrung (25) und die Kopplungsbohrung (27) im Inneren des Kopplungselements (20) ineinanderlaufen.

11. Verankerungselement nach Anspruch 10, **dadurch gekennzeichnet, dass** im Übergangsbereich von Ankerbohrung (25) und Kopplungsbohrung (27) ein Trennelement (29) vorgesehen ist.

## Claims

1. An anchoring element (1) for fastening a climbing formwork to a concrete body, comprising a stop anchor (10) and a coupling element (20), wherein the stop anchor (10) has a head (11) and a threaded rod (12) with an external thread (13), and wherein the coupling element (20) is formed by a, in particular elongated, body, in particular a round body, with an axial anchor bore (25) which has an internal thread (26) which meshes with the external thread (13) of the threaded rod (12), and a sleeve (30) arranged around the coupling element (20) is provided,
**characterized in that**
**in that** a securing element is provided which acts in a frictionally locking manner on the external thread (13) of the threaded rod (12) and/or the internal thread (26) of the anchor bore (25) and is suitable for impeding an unscrewing movement of the threaded rod (12) accommodated in the anchor bore (25), the securing element being arranged on the sleeve.

2. Anchoring element according to claim 1, **characterized in that** the coupling element (20) has a base (21) extending annularly around the opening (24) of the anchor bore (25) and a shell surface (22) widening conically starting from the base (21).

3. Anchoring element according to one of claims 1 or 2 , **characterized in that** the outer contour of the sleeve (20) follows the outer contour of the base (21) and the lateral surface (22) of the coupling element (20).

4. anchoring element according to any one of claims 1 to 3, **characterized in that** the bottom (31) of the sleeve (30) has a circular aperture (33) aligned with the anchor bore (25) of the coupling element (20).

5. Anchoring element according to claim 4, **characterized in that** a sealing lip (34) is provided at the circumferential edge of the aperture (33), which lip projects radially beyond the circumferential edge of the opening (24) of the anchor bore (25).

6. An anchoring element according to one of claims 1 to 5 , **characterized in that** the securing element is formed by a tongue (35), preferably a plastic tongue, which extends into the anchor bore (25) and covers a section of the internal thread (26).

7. Anchoring element according to claim 6 , **characterized in that** the tongue (35) is arranged on the sleeve (30).

8. Anchoring element according to any of the preceding claims, **characterized in that** the length of the threaded rod (12) exceeds the depth of the anchor hole (25).

9. An anchoring member according to any one of the preceding claims, **characterized in that** the coupling member (20) further comprises an axial coupling bore (27).

10. An anchoring element according to claim 9 , **characterized in that** the anchor bore (25) and the coupling bore (27) run into each other inside the coupling element (20).

11. Anchoring element according to claim 10 , **characterized in that** a separating element (29) is provided in the transition region of the anchor bore (25) and the coupling bore (27).

## Revendications

1. Élément d'ancrage (1) pour fixer un coffrage grimpant sur un corps en béton, qui comprend un ancrage d'arrêt (10) et un élément de couplage (20), dans lequel l'ancrage de blocage (10) présente une tête (11) et une tige filetée (12) avec un filetage extérieur (13), et dans lequel l'élément de couplage (20) est formé par un corps, en particulier allongé, en particulier un corps rond, avec un alésage d'ancrage (25) axial, qui présente un filetage intérieur (26), qui s'engage avec le filetage extérieur (13) de la tige filetée (12), et un manchon (30) disposé tout autour de l'élément de couplage (20) est prévu, **caractérisé en ce**
**qu'**est prévu un élément de blocage, qui agit par friction sur le filetage extérieur (13) de la tige filetée (12) et/ou sur le filetage intérieur (26) de l'alésage d'ancrage (25) et est adapté pour empêcher un déplacement de sortie par rotation de la tige filetée (12) logée dans l'alésage d'ancrage (25), dans lequel l'élément de blocage est disposé sur le manchon.

2. Élément d'ancrage selon la revendication 1, **caractérisé en ce que** l'élément de couplage (20) présente un fond (21) s'étendant de manière annulaire autour de l'ouverture (24) de l'alésage d'ancrage (25) et une surface enveloppante (22) s'étendant en partant du fond (21) de manière conique.

3. Élément d'ancrage selon l'une quelconque des revendications 1 ou 2, **caractérisé en ce que** le contour extérieur du manchon (20) suit le contour extérieur du fond (21) et de la surface enveloppante (22) de l'élément de couplage (20).

4. Élément d'ancrage selon l'une quelconque des revendications 1 à 3, **caractérisé en ce que** le fond (31) du manchon (30) présente un ajour (33) de forme circulaire aligné avec l'alésage d'ancrage (25) de l'élément de couplage (20).

5. Élément d'ancrage selon la revendication 4, **caractérisé en ce qu'**est prévue sur le bord périphérique de l'ajour (33) une lèvre d'étanchéité (34), qui se situe de manière radiale au-dessus du bord périphérique de l'ouverture (24) de l'alésage d'ancrage (25).

6. Élément d'ancrage selon l'une quelconque des revendications 1 à 5, **caractérisé en ce que** l'élément de blocage est formé par une languette (35), de préférence une languette en matière plastique, qui atteint l'alésage d'ancrage (25) et recouvre une section du filetage intérieur (26).

7. Élément d'ancrage selon la revendication 6, **caractérisé en ce que** la languette (35) est disposée sur le manchon (30) .

8. Élément d'ancrage selon l'une quelconque des revendications précédentes, **caractérisé en ce que** la longueur de la tige filetée (12) dépasse la profondeur de l'alésage d'ancrage (25).

9. Élément d'ancrage selon l'une quelconque des revendications précédentes, **caractérisé en ce que** l'élément de couplage (20) présente en outre un alésage de couplage (27) axial.

10. Élément d'ancrage selon la revendication 9, **caractérisé en ce que**
l'alésage d'ancrage (25) et l'alésage de couplage (27) s'entremêlent à l'intérieur de l'élément de couplage (20).

11. Élément d'ancrage selon la revendication 10, **caractérisé en ce que**
est prévu, dans la zone de passage de l'alésage d'ancrage (25) et de l'alésage de couplage (27), un élément de séparation (29).
